(19) Europäisches Patentamt
European Patent Office
Office européen des brevets

(11) **EP 2 626 774 A2**

## (12) EUROPEAN PATENT APPLICATION

(43) Date of publication:
**14.08.2013 Bulletin 2013/33**

(21) Application number: **13154630.1**

(22) Date of filing: **08.02.2013**

(51) Int Cl.:
**G06F 3/041** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.02.2012 JP 2012025140**

(71) Applicant: **Funai Electric Co., Ltd.**
**Daito-shi,**
**Osaka 574-0013 (JP)**

(72) Inventors:
• **Uchiama, Manabu**
**Daito-shi, Osaka 574-0013 (JP)**

• **Shimada, Kousuke**
**Daito-shi, Osaka 574-0013 (JP)**
• **Kigawa, Shinichi**
**Daito-shi, Osaka 574-0013 (JP)**
• **Kumagai, Atsushi**
**Daito-shi, Osaka 574-0013 (JP)**
• **Kamisoyama, Shinichi**
**Daito-shi, Osaka 574-0013 (JP)**

(74) Representative: **Grünecker, Kinkeldey,**
**Stockmair & Schwanhäusser**
**Leopoldstrasse 4**
**80802 München (DE)**

### (54) Touch screen calibration

(57)     An electronic device includes a touch screen and a controller. The touch screen is configured to detect touch operation. The controller is configured to perform a calibration of the touch screen by using an approximate expression based on pressed location information of the touch operation on the touch screen. The controller is further configured to update the approximate expression such that the approximate expression represents a function that passes through a common reference point before and after the update.

FIG. 2

EP 2 626 774 A2

**Description**

CROSS-REFERENCE TO RELATED APPLICATIONS

This application claims priority to Japanese Patent Application No. 2012-025140 filed on February 8, 2012. The entire disclosure of Japanese Patent Application No. 2012-025140 is hereby incorporated herein by reference.

BACKGROUND

Field of the Invention

The present invention generally relates to an electronic device. More specifically, the present invention relates to an electronic device with a touch screen. Background Information

Electronic devices with a touch panel type of display component have been known. With electronic devices such as this, there is sometimes a decrease in how accurately a position on the touch panel can be detected, due to changes in the constituent materials over time or to changes in the usage environment. Thus, position detection need to be calibrated.

In view of this, conventional electronic devices that perform a calibration have been proposed (see Japanese Laid-Open Patent Application Publication No. 2006-139655 (Patent Citation 1), for example).

With a conventional display device (e.g., an electronic device) discussed in the Patent Citation I, the calibration is performed based on a difference between center location coordinates of an image component object and pressed location coordinates with respect to this image component object. More specifically, the display device averages the difference between a plurality of pressed location coordinates and the center location coordinates of a corresponding image component object, and then performs a calibration so that the pressed location coordinates and the center location coordinates coincide based on this average value.

SUMMARY

It has been discovered that with the display device discussed in the Patent Citation 1, since the calibration is merely performed such that the pressed location coordinates and the center location coordinates coincide based on the average difference between the pressed location coordinates and the center location coordinates of an image component object, there can be situations in which the amount of correction is too great for the actual amount of deviation, depending on the degree of variance in the pressed location coordinates. In particular, it has been discovered that when the pressed location coordinates have few parameters, there is a tendency for the weight of the individual pressed location coordinates to increase with respect to the average value, and for the amount of correction to be too great. Accordingly, it has been discovered that with the conventional electronic devices, accurate correction is difficult to be achieved by the calibration.

One object of the present disclosure is to provide an electronic device with which an amount of correction can be kept from being excessive by a calibration, which makes more accurate correction possible.

In view of the state of the know technology, an electronic device includes a touch screen and a controller. The touch screen is configured to detect touch operation. The controller is configured to perform a calibration of the touch screen by using an approximate expression based on pressed location information of the touch operation on the touch screen. The controller is further configured to update the approximate expression such that the approximate expression represents a function that passes through a common reference point before and after the update.

Other objects, features, aspects and advantages of the present disclosure will become apparent to those skilled in the art from the following detailed description, which, taken in conjunction with the annexed drawings, discloses a preferred embodiment of an electronic device.

BRIEF DESCRIPTION OF THE DRAWINGS

Referring now to the attached drawings which form a part of this original disclosure:

FIG. 1 is a block diagram of a smart phone in accordance with one embodiment;

FIG. 2 is a schematic diagram of a display component on the smart phone illustrated in FIG. 1;

FIG. 3 is a schematic diagram of the display component of the smart phone illustrated in FIG. 1;

FIG. 4 is a flowchart illustrating an automatic calibration processing performed by the smart phone illustrated in FIG. 1;

FIG. 5 is a schematic diagram of theoretical coordinates of icons displayed on the display component of the smart phone illustrated in FIG. 1;

FIG. 6 is a diagram illustrating an example of pressed coordinates with respect to an icon displayed on the display component of the smart phone illustrated in FIG. 1;

FIG. 7 is a graph of a relation between theoretical values and pressed values in a X direction of the smart phone; and

FIG. 8 is a graph of a relation between theoretical values and pressed values in a Y direction of the smart phone.

DETAILED DESCRIPTION OF EMBODIMENTS

A preferred embodiment will now be explained with reference to the drawings. It will be apparent to those skilled in the art from this disclosure that the following descriptions of the embodiment are provided for illustration only and not for the purpose of limiting the invention as defined by the appended claims and their equivalents.

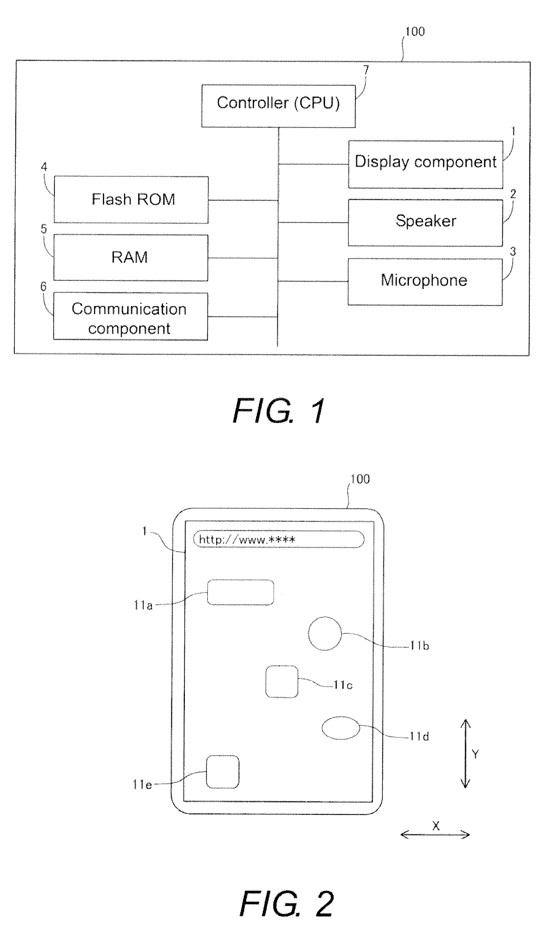

Referring initially to FIG. 1, a smart phone 100 (e.g., an electronic device) is illustrated in accordance with one embodiment. In this embodiment, the smart phone 100 is discussed as an example of the electronic device of the present application. Of course, it will be apparent to those skilled in the art from this disclosure that the electronic device of the present application can be applied to other type of electronic devices.

As shown in FIG. 1, the smart phone 100 has a touch panel type of display component 1 (e.g., a touch screen), a speaker 2, a microphone 3, a flash ROM 4, a RAM 5, a communication component 6, and a controller 7. The controller 7 forms a central processing unit (CPU) of the smart phone 100.

As shown in FIG. 2, the display component 1 has a rectangular liquid crystal display (e.g., a display screen) with a resistance film type of touch panel. Thus, the display component 1 displays image thereon. Furthermore, the display component 1 has a touch panel function that detects touch operation of a user, and generates voltage according to a location of the touch operation of the user (i.e., a location that has been pressed (or touched)). With the display component 1, a location in the lower-left corner serves as a reference location for affixing the touch panel to the liquid crystal display.

The flash ROM 4 is a rewritable, nonvolatile memory. More specifically, the flash ROM 4 is a semiconductor memory in which written data is stored without being disappearing. The flash ROM 4 is a type of memory used in personal computers and the like. Also, as will be discussed below, the flash ROM 4 stores various information used in the calibration of touch panel location detection of the display component 1. The RAM 5 is a volatile memory, and is utilized as a work area for the controller 7. The communication component 6 is capable of wireless communication. The smart phone 100 can be connected to the Internet and a telephone network via the communication component 6.

The controller 7 includes the CPU. The controller 7 controls the overall operation of the smart phone 100 by executing computer programs (not shown). As discussed below, the controller 7 executes automatic calibration processing of the touch panel at all times while the smart phone 100 is actuated. Consequently, the calibration is carried out automatically by the controller 7, without the user having to input any execution command for the calibration processing. Specifically, the user does not need to do any special operation for the calibration processing. The controller 7 calculates (or achieves) an approximate expression used in the calibration based on actual pressed coordinates of the touch operation with respect to icons 11a to 11e (see FIG. 2) displayed on the display component 1 in the automatic calibration processing. More specifically, the controller 7 calculates or updates the approximate expression based on the actual pressed coordinates with respect to different icons 11a to 11e disposed (or displayed) apart from each other by a specific distance. The approximate expression represents a function that passes through a common reference point before and after the update of the approximate expression. The approximate expression represents a relation between theoretical coordinates of the icons 11a to 11e displayed on the display component 1 and the pressed coordinates of the touch operation with respect to the icons 11a to 11e. Then, the controller 7 corrects location deviation between the pressed coordinates and the theoretical coordinates by using the approximate expression to perform the calibration. The theoretical coordinates are coordinates that define theoretical display locations (or initial locations) of display objects such as the icons 11a to 11e that are displayed on the display component 1. The pressed coordinates are an example of pressed location information of the present application, while the theoretical coordinates are an example of display location information of the present application.

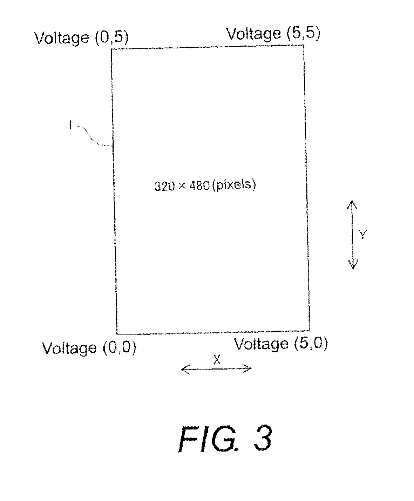

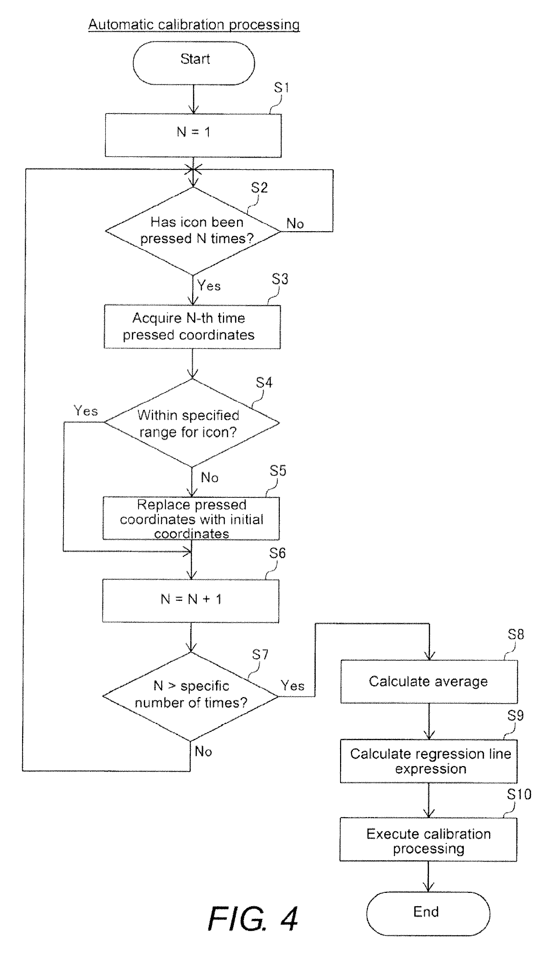

Next, the automatic calibration processing executed by the controller 7 of the smart phone 100 will be described through reference to FIGS. 2 to 8. As shown in FIG. 2, the automatic calibration processing can be performed while the user is browsing the Internet. In the illustrated embodiment, as shown in FIG. 3, the resolution of the display component I is 320 × 480 (pixels), for example. Furthermore, in the illustrated embodiment, the lower-left corner of the touch panel of the display component 1 (i.e., the reference location for affixing the touch panel to the liquid crystal display) corresponds to a minimum theoretical coordinate, and voltages (or voltage values) generated upon touching the lower-left corner of the touch panel is set to (0 (V), 0 (V)). On the other hand, in the illustrated embodiment, the upper-right corner of the touch panel of the display component 1 corresponds to a maximum theoretical coordinate, and voltages (or voltage values) generated upon touching the upper-right corner of the touch panel is set to (5 (V), 5 (V)). Furthermore, in the illustrated embodiment, there is a linear relation between a pressed location on the touch panel (e.g., the pressed coordinates) and a detected pressed location (e.g., the voltage values). In the illustrated embodiment, for example, the pressed coordinate and the generated voltage value have one-to-one correspondence. In the illustrated embodiment, as shown in FIG. 2, a plurality of (five in FIG. 2) the icons 11a to 11e are displayed in the Internet browser screen on the display component 1. The controller 7 executes the automatic calibration processing shown in FIG. 4 for each of the five icons 11a to 11e. The icons 11a to 11e are examples of objects of the present application.

First, when the user turns on the smart phone 100, the controller 7 commences the automatic calibration processing shown in FIG. 4. In step S1, the controller 7 sets the number of times N a specific icon has been pressed to N = 1. In step S2, the controller 7 determines whether or not the specific icon has been pressed an N-th time, and repeats this determination until the pressed coordinates to be corrected have been detected. When the specific icon has been pressed N times, the controller 7, in step S3, acquires the N-th time pressed coordinates (i.e., the voltage value) detected by the display component 1, and stores them in the flash ROM 4.

After this, the controller 7 determines whether or not the acquired pressed coordinates of the touch operation with respect to the specific icon are within a specified range (e.g., a predetermined range) for the specific icon based on the following formulas (1) and (2).

$$|Xo - Xr| > A \;...\; (1)$$

$$|Yo - Yr| > B \;...\; (2)$$

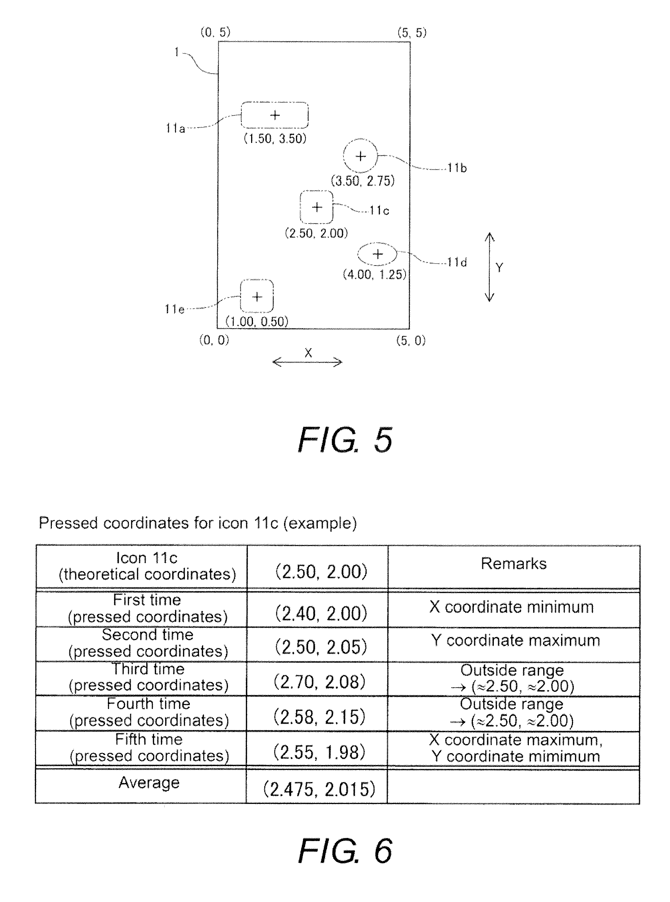

More specifically, the controller 7 determines whether or not the amount of deviation between a pressed value of the voltage and a theoretical value of the voltage is greater than a permissible value in each of the X and Y directions. The pressed value is an example of pressed location information of the present application, while the theoretical value is an example of display location information of the present application. If neither Formula (1) nor Formula (2) applies, the controller 7 then determines that the pressed coordinates are located within the specified range for that icon. That is, if either Formula (1) or Formula (2) applies, it is determined that the acquired pressed coordinates are outside the specified range for that icon. The theoretical values for the centers of the icons 11a to 11e are shown in FIG. 5.

In Formula (1) above, Xo indicates the pressed value (V) in the X direction, Xr indicates the theoretical value (V) in the X direction, and A indicates the permissible value (V) in the X direction. In Formula (2) above, Yo indicates the pressed value (V) in the Y direction, Yr indicates the theoretical value (V) in the Y direction, and B indicates the permissible value (V) in the Y direction.

The specified range is, for example, within 10 pixels from the center of the icon in each of the X and Y directions. In this case, the permissible value A in the X direction is approximately 0.16 (V) (= 5 (V)/320 (pixels) × 10 (pixels)). The permissible value B in the Y direction is approximately 0.10 (V) (= 5 (V)1480 (pixels) × 10 (pixels)).

If the pressed coordinates are not within the specified range for the icon (i.e., outside the specified range), then the controller 7, in step S5, replaces the N-th time pressed coordinates stored in the flash ROM 4 with initial coordinates (e.g., predetermined location information or initial voltage values). The initial coordinates (or initial voltage values) are the pressed coordinates (or the pressed values) detected when the center of the corresponding icon has been pressed at the point of factory shipping, and are coordinates that substantially coincide with the theoretical coordinates (or the theoretical voltage value). For example, FIG. 6 illustrates an example of the pressed coordinates for the icon 11c. As shown in FIG. 6, the third time pressed coordinates (2.70, 2.08) and the fourth time pressed coordinates (2.58, 2.15) are outside the specified range. Thus, the third and fourth time pressed coordinates are both replaced with the initial coordinates that have been preset at the point of factory shipping (e.g., (2.50, 2.00)).

Meanwhile, if the pressed coordinates are within the specified range for the icon, the controller 7 skips step S5 and proceeds to step S6. In step S6, the controller 7 increments the number of times pressed and sets it to N = N + 1. In step S7, the controller 7 determines whether or not the number of times pressed N has exceeded a specific number (such as 5). If the specific number of times has not been exceeded, the processing of steps S2 to S7 is repeated until the specific number of times is exceeded.

Once the number of times pressed N has exceeded the specified number, the controller 7, in step S8, calculates the average (e.g., average pressed values) between the maximum and minimum (e.g., maximum and minimum values) of the pressed coordinates and the initial coordinates of the specified number of times (such as 5) with respect to the icon. More specifically, the controller 7 calculates the average between the maximum and minimum pressed values for the specified number of times in both the X and Y directions based on the pressed coordinates and the initial coordinates. For example, with the icon 11c as shown in FIG. 6, the maximum in the X direction is the pressed value on the fifth time (2.55), while the minimum in the X direction is the pressed value on the first time (2.40). On the other hand, the maximum in the Y direction is the pressed value on the second time (2.05), while the minimum in the Y direction is the pressed value on the fifth time (1.98). From these values, the controller 7 derives an average pressed value of 2.475 in the X direction, and an average pressed value of 2.015 in the Y direction. Any pressed coordinates that are outside the specified range are determined by the value after having been replaced with the initial coordinates.

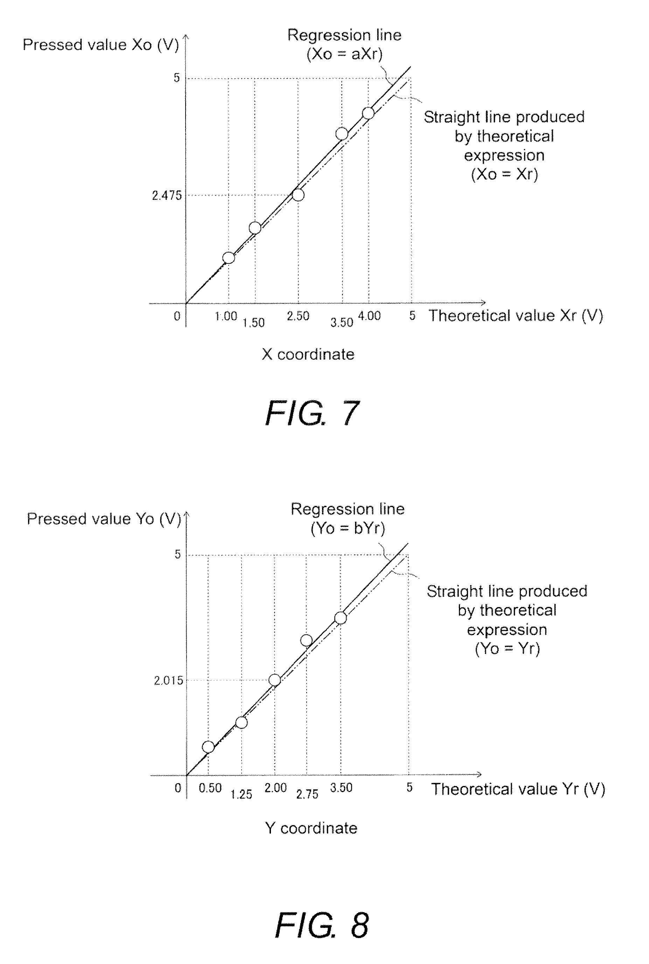

After this, in step S9, the controller 7 calculates or derives a regression line expression as an approximate expression of the pressed coordinates based on the above-mentioned average values. More specifically, as shown in FIGS. 7 and 8, the regression line expressions are calculated such that the regression line expressions represent the relations between the theoretical values (V) based on the theoretical display locations of the icons 11a to 11e and the pressed values (V) based on the actual pressed location on the display component 1 with respect to the icons 11a to 11e in both the X and Y directions, respectively. For example, with the icon 11c, as shown in FIG. 7, the theoretical value is 2.50 in the X direction while the average pressed value is 2.475 as shown in FIG. 6. Thus, the average pressed value deviates with respect to the straight line produced by the theoretical expression (Xo = Xr). Specifically, this deviation between the pressed value (V) in the X direction based on the actual pressed location and the theoretical value (V) in the X direction based on the theoretical display location is caused by changes in the constituent materials of the smart phone 100 over time, changes in the usage environment, etc. Similarly, in the Y direction, the average pressed value of 2.015 deviates with respect to the straight line produced by the theoretical expression (Yo = Yr). The situation with the other icons (11a, 11b, 11d, and 11e) is the same as that with the icon 11c.

The controller 7 calculates the regression line expression such that the regression line represents the relation between the theoretical values and the pressed values based on a plurality of the average pressed values obtained for each icon in the X direction (see Formula (3) below), and stores this in the flash ROM 4.

$$Xo = aXr \dots \qquad (3)$$

More specifically, in the example of the Internet browser screen shown in FIG. 2, the regression line expression is calculated for the average pressed values of the icons 11a to 11e (i.e., five average pressed values) as shown in FIG. 7. Here, the controller 7 calculates the regression line expression that defines a straight line passing through the origin in the relation between the theoretical values and the pressed values. Specifically, as shown in FIG. 7, the straight line defined by the regression line expression and the straight line produced by the theoretical expression pass through a common reference point (i.e., the origin). In other words, the straight line defined by the regression line expression passes through the common reference point (i.e., the origin) before and after the calibration. The origin in the relation between the theoretical value and the pressed value is an example of the reference point in the present application. The controller 7 calculates the regression line expression by the method of least squares based on the plurality of average pressed values.

In Formula (3) above, Xo indicates the pressed value (V) in the X direction, a indicates the slope of the regression line in the X direction, and Xr indicates the theoretical value (V) in the X direction.

The slope a of the regression line is calculated from the following formula (4).

$$a = \Sigma(Xri - Xrave)(Xoi - Xoave) \div \Sigma(Xri - Xrave)^2 \dots (4)$$

In Formula (4) above, Xri indicates the theoretical value (V) of the i-th icon, Xrave indicates the average (V) of the theoretical values of all icons in question, Xoi indicates the average pressed value (V) for the i-th icon, and Xoave indicates the average (V) of the average pressed values for individual icons.

For example, when the controller 7 calculates the average pressed value for the icon 11c as shown in step S8 in FIG. 4, the controller 7 can calculate the regression line expression based on the parameters in Formula (4) based on the newly calculated average pressed value for the icon 11c and stored pressed values (or initial values) for the icons 11a, 11b, 11d and 11e, that are stored in the flash ROM 4.

The controller 7 also calculates the regression line expression such that the regression line expression represents the relation between the theoretical values and the pressed values in the Y direction just as for the X direction (see Formula (5) below), and stores it in the flash ROM 4.

$$Yo = bYr \dots (5)$$

The controller 7 calculates the regression line expression that defines a straight line passing through the origin in the relation between the theoretical values and the pressed values in the Y direction by the method of least squares as shown in FIG. 8.

In Formula (5) above, Yo indicates the pressed value (V) in the Y direction, b indicates the slope of the regression line in the Y direction, and Yr indicates the theoretical value (V) in the Y direction.

The slope b of the regression line is calculated from the following formula (6).

$$b = \Sigma(\mathrm{Yri} - \mathrm{Yrave})(\mathrm{Yoi} - \mathrm{Yoave}) \div \Sigma(\mathrm{Yri} - \mathrm{Yrave})^2 \ ... \ (6)$$

In Formula (6) above, Yri indicates the theoretical value (V) of the i-th icon, Yrave indicates the average (V) of the theoretical values of all icons in question, Yoi indicates the average pressed value (V) for the i-th icon, and Yoave indicates the average (V) of the average pressed values for individual icons.

For example, when the controller 7 calculates the average pressed value for the icon 11c as shown in step S8 in FIG. 4, the controller 7 can calculate the regression line expression based on the parameters in Formula (6) based on the newly calculated average pressed value for the icon 11c and stored pressed values (or initial values) for the icons 11a, 11b, 11d and 11e, that are stored in the flash ROM 4.

After this, in step S10, the controller 7 executes the automatic calibration. Here, the controller 7 performs the calibration based on the amount of deviation of the regression line expression with respect to the theoretical expression in both the X and Y directions. The controller 7 also corrects the deviation between the theoretical value and the pressed value by performing the calibration. For example, the pressed values in the X and Y directions are corrected to the theoretical values based on the regression line expressions. In the illustrated embodiment, as discussed above, when the specific icon has been pressed the specific number of times (such as five times), the automatic calibration is performed by re-calculating the regression line expressions. For the icon that has been pressed the specific number of times, the pressing count is reset and is started over again.

In the illustrated embodiment, the smart phone 100 has a touch panel type of display component 1 and the controller 7. The controller 7 performs the calibration by using the approximate expression that is based on the pressed coordinates with respect to the display component 1 and that defines a straight line passing through the common reference point (e.g., the origin) before and after the calibration. Thus, the amount of correction is kept from being excessive. Specifically, the approximate expression defines a straight line passing through the common reference point before and after the calibration, it less unlikely that the approximate expression will deviate greatly before and after the calibration even when there are few parameters (or samples) for the pressed coordinates. Accordingly, the amount of correction can be kept from being excessive by using this approximate expression to perform the calibration. Also, the calibration is performed by the controller 7 using the approximate expression based on the pressed coordinates. Unlike when a calibration is merely performed so that the pressed coordinates and the theoretical coordinates will coincide based on the average value of the difference between the pressed coordinates and the theoretical coordinates of an icon displayed on the display component 1, the individual pressed coordinates will have less effect (or weight) on the amount of correction. Thus, the amount of correction can be easily kept from becoming excessive due to few parameters of pressed coordinates. Therefore, with this smart phone 100, the amount of correction can be kept from being excessive, and accurate correction can be performed, by the calibration.

In the illustrated embodiment, the controller 7 performs the calibration by using the approximate expression that represents the relation between the theoretical coordinates of the icons 11a to 11e displayed on the display component 1 and the pressed coordinates with respect to the icons 11a to 11e. Consequently, the controller 7 can easily acquire the amount of deviation between the theoretical coordinates and the actual pressed coordinates based on the approximate expression. Thus, the calibration can be carried out easily.

In the illustrated embodiment, the controller 7 calculates the approximate expression that defines a straight line that passes through the reference point, based on a plurality of the pressed coordinates for a plurality of the icons 11a to 11e spaced apart from each other by specific distances. Consequently, the approximate expression is calculated by the controller 7 based on a plurality of the pressed coordinates for the icons 11a to 11e spaced apart from each other. Thus, the effect (or weight) that the individual pressed coordinates has on the amount of correction can be reduced. As a result, the amount of correction can be better kept from being excessive.

In the illustrated embodiment, the controller 7 calculates the approximate expression that defines a straight line passing through the reference point, based on the pressed coordinates, after pressed coordinates outside the specific range out of a plurality of the pressed coordinates have been replaced with the initial coordinates. Consequently, the controller 7 replaces the pressed coordinates outside the specific range with a value that is closer to the theoretical coordinates. Thus, the amount of correction can be prevented from becoming excessive due to the pressed coordinates that have greatly deviated from the specific range. Also, the approximate expression can be calculated with larger parameters (or samples), as opposed to when the approximate expression is calculated by eliminating pressed coordinates outside the specific range, the effect (or weight) that the individual pressed coordinates have on the amount of correction can be reduced. This again keeps the amount of correction from being excessive.

In the illustrated embodiment, the controller 7 performs the calibration by using the regression line expression as the approximate expression based on a plurality of the pressed coordinates. Consequently, the controller 7 can easily perform the calibration by using the regression line expression.

In the illustrated embodiment, the controller 7 performs the calibration by calculating the regression line expression by the least squares method based on a plurality of the pressed coordinates. Consequently, the controller 7 can easily calculate the regression line expression by using the least squares method.

In the illustrated embodiment, the controller 7 performs the calibration such that the calibration corrects the deviation between a straight line defined by the regression line expression and a straight line defined by the theoretical expression based on the theoretical coordinates of the icons. Consequently, the controller 7 can easily perform the calibration by correcting the deviation between the theoretical coordinates and the pressed coordinates based on the amount of deviation between the straight line defined by the theoretical expression and the straight line defined by the regression line expression.

In the illustrated embodiment, the controller 7 calculates the approximate expression based on the average between the maximum and minimum of a plurality of the pressed coordinates with respect to each of the icons 11a to 11e. Consequently, the approximate expression is calculated by the controller 7 in a state in which a plurality of the pressed coordinates with respect to the single icon have been averaged into a single value (e.g., the average pressed value). Thus, the approximate expression can be easily calculated based on a plurality of the pressed coordinates.

In the illustrated embodiment, the reference point is the origin in the relation between the theoretical coordinates of the icons 11a to 11e and the pressed coordinates for the icons 11a to 11e. Consequently, the approximate expression that passes through the origin in the relation between the theoretical coordinates and the pressed coordinates is used in the calibration performed by the controller 7. Thus, even if there are few parameters, the approximate expression can be kept from greatly deviating from the theoretical coordinates. As a result, the amount of correction can be kept from being excessive.

The foregoing descriptions of the embodiment according to the present invention are provided for illustration only, and not for the purpose of limiting the invention as defined by the appended claims and their equivalents. While only a preferred embodiment has been chosen to illustrate the present invention, it will be apparent to those skilled in the art from this disclosure that various changes and modifications can be made herein without departing from the scope of the invention as defined in the appended claims.

For example, in the illustrated embodiment, the smart phone 100 is illustrated as an example of the electronic device of the present application. However, the present application can be applied to an electronic device other than the smart phone 100, so long as it is an electronic device equipped with a touch panel type of display component.

In the illustrated embodiment, the display component 1 with the resistance film type of touch panel is illustrated as an example of the touch screen of the present application. However, the present application is not limited to this. The display component 1 can have a touch panel without a resistance film. For example, the display component 1 can have an ultrasonic type of touch panel, an electrostatic capacitance type of touch panel, an optical type of touch panel, an electromagnetic induction type of touch panel, and so forth.

In the illustrated embodiment, the regression line expression (e.g., the approximate expression) is calculated based on the pressed coordinates (e.g., the pressed location information) for five icons 11a to 11e (or five objects). However, the present application is not limited to this. The approximate expression can be calculated based on the pressed location information for just one object (or icon) or for a plurality of objects (or icons) other than five. Also, if a plurality of the objects is used, then the approximate expression can be calculated more accurately when the objects are spaced widely apart.

In the illustrated embodiment, the regression line expression (e.g., the approximate expression) is calculated based on the pressed coordinates (e.g., the pressed location information) for the icons 11a to 11e (or objects) displayed on the Internet browser screen. However, the present application is not limited to this. The approximate expression can be calculated based on the pressed location information for the objects displayed on a screen other than the Internet browser screen, such as a dial screen for a telephone call, and the like.

In the illustrated embodiment, the regression line expression (e.g., the approximate expression) is calculated when a single icon (or object) has been pressed a plurality of times (e.g., five times). However, the present application is not limited to this. The regression line expression (e.g., the approximate expression) can be calculated every time the object is pressed.

In the illustrated embodiment, the regression line expression (e.g., the approximate expression) is calculated based on the average of the maximum and minimum out of a plurality of the pressed coordinates (e.g., set of pressed location information) with respect to a single icon (or object). However, the present application is not limited to this. The approximate expression can be calculated for all pressed location information without using the average.

In the illustrated embodiment, the linear relation between the pressed locations on the display component 1 and the pressed coordinates (e.g., the pressed location information) that are detected. However, the present application is not limited to this. The relation between the pressed locations on the display component 1 and the detected pressed location information can be defined by a higher order expression or by a nonlinear expression.

In the illustrated embodiment, the calibration is performed using the regression line expression (e.g., the approximate expression) that defines a straight line. However, the present application is not limited to this. The calibration can be performed using an approximate expression that defines a curve. In particular, the calibration can be performed using an approximate expression that defines a curve that passes through the common reference point.

In the illustrated embodiment, the regression line expression is calculated by the method of least squares. However, the present application is not limited to this. The regression line expression can be calculated by a method other than the method of least squares.

In the illustrated embodiment, the origin in the relation between the theoretical values (e.g., the display location information) and the pressed values (e.g., the pressed location information) is used as an example of the reference point of the present application. However, the present application is not limited to this. The reference point other than the origin can be used, so long as the straight line or curve defined by the approximate expression includes a common point that passes in common before and after the calibration. It is preferable if the line (straight line or curve) defined by the approximate expression and the line (straight line or curve) defined by the theoretical expression pass through a common reference point. Consequently, the amount of deviation between the line defined by the approximate expression and the line defined by the theoretical expression can be further reduced. Thus, the amount of correction can be better kept from being excessive.

In the illustrated embodiment, the regression line expression is used as an example of the approximate expression based on the pressed coordinates (e.g., the pressed location information). However, the present application is not limited to this. The approximate expression can be an approximate expression based on pressed location information other than the regression line expression.

In the illustrated embodiment, the calibration is performed using the regression line expression (e.g., the approximate expression) that represents the relation between the theoretical values (e.g., the display location information) and the pressed values (e.g., the pressed location information). However, the present application is not limited to this. The calibration can be performed by using an approximate expression that represents the relation between the pressed location information for the X direction and the pressed location information for the Y direction. More specifically, the calibration can be performed by using an approximate expression of the pressed coordinates that represents the relation between the pressed value in the X direction of the pressed coordinate and the pressed value in the Y direction of the pressed coordinate.

In the illustrated embodiment, the pressed coordinates (e.g., the pressed location information) detected when the centers of the icons (e.g., object centers) are pressed at the point of factory shipping are used as the initial coordinates for the present application. In other words, in the illustrated embodiment, at the time of factory shipping, the initial coordinates of the icons can be preset. However, the present application is not limited to this. The theoretical coordinates (e.g., the display location information) of the object centers (e.g., icon centers) can be used instead as the initial coordinates.

In the illustrated embodiment, the processing to calculate the regression line expression as the approximate expression and the processing to perform the calibration by using this approximate expression are carried out by the single (or common) controller 7. However, the present application is not limited to this. The processing to calculate the approximate expression and the processing to perform the calibration by using this approximate expression can be carried out by mutually distinct or separate controllers.

In the illustrated embodiment, the calibration is performed automatically by the controller 7 without the user having to issue an execution command for the calibration processing. However, the present application is not limited to this. The calibration can be performed by using the approximate expression based on the pressed location information based on an execution command from the user for the calibration processing. Specifically, the calibration can be performed by using the approximate expression based on the pressed location information in a calibration mode to which the smart phone 100 is switched from a normal mode based on a user command. In the normal mode, the user uses various functions of the smart phone 100, such as an Internet function, a telephone function, etc.

In the illustrated embodiment, a flow drive type of flowchart is used for the sake of convenience, in which the processing of the controller 7 is performed sequentially according to the processing flow. However, the present application is not limited to this. The processing operation of the controller 7 can be performed by an event drive type of processing in which processing is executed in event units. In this case, the drive can be completely event drive, or can be a combination of event drive and flow drive.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts.

While only a preferred embodiment has been chosen to illustrate the present invention, it will be apparent to those skilled in the art from this disclosure that various changes and modifications can be made herein without departing from the scope of the invention as defined in the appended claims. Furthermore, the foregoing descriptions of the embodiment according to the present invention are provided for illustration only, and not for the purpose of limiting the invention as defined by the appended claims and their equivalents.

**Claims**

1. An electronic device comprising:

   a touch screen configured to detect touch operation; and
   a controller configured to perform a calibration of the touch screen by using an approximate expression based on pressed location information of the touch operation on the touch screen, the controller being further configured to update the approximate expression such that the approximate expression represents a function that passes through a common reference point before and after the update.

2. The electronic device according to claim 1, wherein
   the controller is configured such that the approximate expression represents a relation between display location information of an object displayed on the touch screen and the pressed location information of the touch operation with respect to the object.

3. The electronic device according to claim 2, wherein
   the controller is configured to calculate the approximate expression based on a plurality sets of the pressed location information of the touch operation with respect to a first object displayed on the touch screen and a plurality of sets of the pressed location information of the touch operation with respect to a second object displayed on the touch screen, with the second object spaced away from the first object by a specific distance.

4. The electronic device according to any of claims 1 to 3, wherein
   the controller is configured to replace the pressed location information of the touch operation with respect to an object with predetermined location information in response to the touch operation with respect to the object being outside a predetermined range with respect to the object, the controller being further configured to calculate the approximate expression based on the pressed location information and the predetermined location information.

5. The electronic device according to any of claims 1 to 4, wherein
   the controller is configured to calculate the approximate expression as a regression line expression based on a plurality of sets of the pressed location information.

6. The electronic device according to claim 5, wherein
   the controller is configured to calculate the regression line expression by a least squares method based on the plurality of sets of pressed location information.

7. The electronic device according to claim 5 or 6, wherein
   the controller is configured to perform the calibration such that the calibration corrects a deviation between a straight line defined by the regression line expression and a straight line defined by a theoretical expression based on display location information of an object displayed on the touch screen.

8. The electronic device according to any of claims 1 to 7, wherein
   the controller is configured calculate the approximate expression based on an average between a maximum value of a plurality of sets of the pressed location information and a minimum value of the plurality of sets of the pressed location information with respect to a single object displayed on the touch screen.

9. The electronic device according to any of claims 1 to 8, wherein
   the common reference point is an origin of a relation between display location information of an object displayed on the touch screen and the pressed location information with respect to the object.

10. The electronic device according to claim 1, wherein
    the controller is configured such that the approximate expression represents a straight line that passes through the common reference point.

**11.** The electronic device according to claim 1, wherein
the controller is configured such that the approximate expression represents a curve that passes through the common reference point.

100

7

Controller (CPU)

1

Display component

4

Flash ROM

2

Speaker

5

RAM

3

Microphone

6

Communication component

## FIG. 1

100

1

http://www.****

11a

11b

11c

11d

Y

11e

X

## FIG. 2

Voltage (0,5)  Voltage (5,5)

320 × 480 (pixels)

Voltage (0,0)  Voltage (5,0)

*FIG. 3*

Automatic calibration processing

```
           ┌─────────────┐
           │    Start     │
           └──────┬──────┘
                  │            S1
           ┌──────▼──────┐
           │    N = 1     │
           └──────┬──────┘
                  │
                  │            S2
             ◇─────────────◇
             │ Has icon been │──── No ────┐
             │ pressed N times?│          │
             ◇─────────────◇          │
                  │ Yes        S3          │
           ┌──────▼──────┐              │
           │ Acquire N-th time │         │
           │ pressed coordinates │       │
           └──────┬──────┘              │
                  │            S4         │
             ◇─────────────◇          │
      Yes ──│ Within specified │        │
        │    │  range for icon? │        │
        │    ◇─────────────◇          │
        │         │ No          S5       │
        │   ┌──────▼──────┐            │
        │   │ Replace pressed │         │
        │   │ coordinates with initial│ │
        │   │   coordinates    │        │
        │   └──────┬──────┘            │
        │          │         S6          │
        │   ┌──────▼──────┐            │
        └──▶│   N = N + 1   │            │
            └──────┬──────┘            │
                   │        S7           │
              ◇─────────────◇   Yes   ┌───────────────┐ S8
              │ N > specific │────────▶│ Calculate average │
              │ number of times?│       └────────┬──────┘
              ◇─────────────◇                │         S9
                   │ No                ┌────────▼──────┐
                   └──────────────     │ Calculate regression line │
                                       │   expression   │
                                       └────────┬──────┘
                                                │        S10
                                       ┌────────▼──────┐
                                       │ Execute calibration │
                                       │   processing   │
                                       └────────┬──────┘
                                                │
                                         ┌──────▼──────┐
                                         │     End      │
                                         └─────────────┘
```

# FIG. 4

## FIG. 5

Pressed coordinates for icon 11c (example)

| Icon 11c<br>(theoretical coordinates) | (2.50, 2.00) | Remarks |
|---|---|---|
| First time<br>(pressed coordinates) | (2.40, 2.00) | X coordinate minimum |
| Second time<br>(pressed coordinates) | (2.50, 2.05) | Y coordinate maximum |
| Third time<br>(pressed coordinates) | (2.70, 2.08) | Outside range<br>→ (≈2.50, ≈2.00) |
| Fourth time<br>(pressed coordinates) | (2.58, 2.15) | Outside range<br>→ (≈2.50, ≈2.00) |
| Fifth time<br>(pressed coordinates) | (2.55, 1.98) | X coordinate maximum,<br>Y coordinate mimimum |
| Average | (2.475, 2.015) | |

## FIG. 6

Pressed value Xo (V)

Regression line
(Xo = aXr)

5

2.475

Straight line produced
by theoretical
expression
(Xo = Xr)

0    1.00  1.50    2.50   3.50 4.00      5   Theoretical value Xr (V)

X coordinate

## FIG. 7

Pressed value Yo (V)

Regression line
(Yo = bYr)

5

2.015

Straight line produced
by theoretical
expression
(Yo = Yr)

0    0.50  1.25   2.00  2.75  3.50          5   Theoretical value Yr (V)

Y coordinate

## FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012025140 A

- JP 2006139655 A